# EUROPEAN PATENT APPLICATION

(11) **EP 4 693 654 A1**
(43) Date of publication of application: **11.02.2026**
(21) Application number: 25193508.6
(22) Date of filing: 01.08.2025
(51) Int. Cl.: H01M 50/24, A62C 3/16, H01M 50/271, H01M 50/298, H01M 50/383, H01M 50/507

(54) **BATTERY MODULE**

(30) Priority: 08.08.2024 KR 20240106373
(71) Applicant: SAMSUNG SDI CO., LTD., Yongin-si, Gyeonggi-do 17084 (KR)
(72) Inventor: LEE, DOHYUNG, 17084 Yongin-Si (KR)
(74) Representative: Regimbeau

(57) **Abstract**

A battery module (100) comprises a cell array (30) including a plurality of battery cells (10) and a plurality of busbars (20) electrically connecting the plurality of battery cells. A casing (115) accommodates the cell array, and a cover section (140) is coupled to the casing to cover the cell array. A fire extinguishing section (170) is disposed between the cell array and the cover section. The fire extinguishing section includes a fire extinguishing sheet (160) configured to emit a fire extinguishing agent and a thermal conductive layer (150) configured to conduct heat throughout the fire extinguishing sheet.

## Description

### FIELD

The present disclosure relates to a battery module.

### BACKGROUND

Secondary batteries are batteries that can be charged and discharged, unlike primary batteries that cannot be recharged. Low-capacity secondary batteries are used in small portable electronic devices such as smartphones, feature phones, laptop computers, digital cameras, and camcorders, and large-capacity secondary batteries are widely used as power sources for driving motors in hybrid cars, electric cars, and as power storage batteries. Secondary batteries include an electrode assembly comprising a positive electrode and a negative electrode, a casing for accommodating the electrode assembly, and electrode terminals connected to the electrode assembly.

The information disclosed in this section is only intended to improve understanding of the background of the present disclosure and therefore may include information that does not constitute related art.

### SUMMARY

The present disclosure provides a battery module with improved stability.

However, the technical problems to be solved by the present disclosure are not limited to the problem described herein, and other problems not mentioned can be clearly understood by those skilled in the art from the description of the disclosure described below.

Additional aspects will be set forth in part in the description which follows and, in part, will be apparent from the description, or may be learned by practice of the presented embodiments of the disclosure.

An aspect of the present disclosure provides a battery module including: a cell array including a plurality of battery cells and a plurality of busbars electrically connecting the plurality of battery cells; a casing accommodating the cell array; a cover section coupled to the casing to cover the cell array; and a fire extinguishing section disposed between the cell array and the cover section, wherein the fire extinguishing section includes a fire extinguishing sheet configured to emit a fire extinguishing agent and a thermal conductive layer configured to conduct heat throughout the fire extinguishing sheet.

In an embodiment, the fire extinguishing sheet may be positioned to overlap an entire area of the cell array.

In an embodiment, each of the plurality of battery cells may include a vent hole on a surface thereof, and the fire extinguishing sheet may include an opening through which the vent hole is exposed.

In an embodiment, the cell array may further include wirings electrically connected to the busbars, and the fire extinguishing sheet may be positioned to overlap the wirings.

In an embodiment, the plurality of battery cells may be arranged in a plurality of rows that are parallel to each other, and the wirings may be positioned between the rows.

In an embodiment, a lower surface of the fire extinguishing sheet may have the same shape as an upper surface of the cell array.

In an embodiment, the fire extinguishing sheet may be positioned between the cell array and the thermal conductive layer.

In an embodiment, the thermal conductive layer may be bonded to the cover section.

In an embodiment, the thermal conductive layer may be positioned inside the fire extinguishing sheet, and the thermal conductive layer may include at least one thermal conductive wiring.

In an embodiment, the fire extinguishing sheet may include 40 wt% to 60 wt% of the extinguishing agent.

Another aspect of the present disclosure provides a battery module including: a plurality of battery cells; a casing accommodating the plurality of battery cells; a cover section coupled to the casing; and a fire extinguishing section disposed between the plurality of battery cells and the cover section, wherein the fire extinguishing section includes a fire extinguishing sheet configured to emit a fire extinguishing agent and a thermal conductive layer configured to conduct heat throughout the fire extinguishing sheet, wherein the fire extinguishing sheet includes 40 wt% to 60 wt% of the fire extinguishing agent.

In an embodiment, the fire extinguishing sheet may be positioned to overlap an entire area of the plurality of battery cells.

In an embodiment, each of the plurality of battery cells may include a vent hole on a surface thereof, and the fire extinguishing sheet may include an opening through which the vent hole is exposed.

In an embodiment, the battery module may further include a plurality of busbars electrically connecting the battery cells and wirings electrically connected to the busbars, and the fire extinguishing sheet may be positioned to overlap the wirings.

In an embodiment, the battery cells may be arranged in a plurality of rows that are parallel to each other, and the wirings may be positioned between the rows.

### BRIEF DESCRIPTION OF THE DRAWINGS

The drawings attached to this specification illustrate preferred embodiments of the present disclosure and, together with the detailed description of the present disclosure described below, serve to further articulate the technical idea of the present disclosure. The present disclosure is not limited to matters described in such drawings.

The above described and other aspects, features, and advantages of certain embodiments of the disclosure will be more apparent from the following description taken in conjunction with the accompanying drawings, in which:
FIG. 1 is an exploded perspective view schematically illustrating an example of a battery module according to an embodiment of the present disclosure;
FIG. 2 is a perspective view schematically illustrating an example of a battery cell of the battery module of FIG. 1;
FIG. 3 is a schematic cross-sectional view taken along section III-III of FIG. 2;
FIG. 4 is an exploded perspective view schematically illustrating another example of a battery module according to an embodiment of the present disclosure;
FIG. 5 is an exploded perspective view schematically illustrating another example of a battery module according to an embodiment of the present disclosure;
FIG. 6 is a perspective view schematically illustrating part A of FIG. 5;
FIG. 7 is an exploded perspective view schematically illustrating a still another example of a battery module according to an embodiment of the present disclosure;
FIG. 8 is an exploded perspective view schematically illustrating a still yet another example of a battery module according to an embodiment of the present disclosure;
FIG. 9 is an exploded perspective view schematically illustrating a further example of a battery module according to an embodiment of the present disclosure; and
FIG. 10 is a perspective view schematically illustrating an example of a cover section including a thermal conductive layer of a battery module according to an embodiment of the present disclosure.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, embodiments are described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

Terms or words used in this specification and claims should not be construed as being limited to their usual or dictionary meanings, and should be construed as meanings and concepts that conform to the technical idea of the present disclosure based on the principle that the inventor can appropriately define the concepts of the terms in order to explain his or her own invention in the best way. Therefore, the embodiments described in this specification and the configurations illustrated in the drawings are merely some of the most preferred embodiments of the present disclosure and do not represent all of the technical ideas of the present disclosure, and it should be understood that there may be various equivalents and modifications that can replace them at the filing time of this application.

In addition, when used herein, the words "comprise", "include" and/or "comprising", "including" specify the presence of stated features, numbers, steps, operations, members, elements and/or groups thereof, but do not preclude the presence or addition of one or more other features, numbers, operations, members, elements and/or groups thereof.

In addition, to aid understanding of the disclosure, the accompanying drawings are not drawn to scale and the dimensions of some components may be exaggerated. In addition, the same reference numbers may be assigned to the same components in different embodiments.

Although the terms first, second, etc. are used to describe various components, these components are not limited by these terms. These terms are used only to distinguish one component from another, and unless otherwise specifically stated, it is to be understood that a first component may also be a second component.

Throughout the specification, unless otherwise specifically stated, each element may be singular or plural.

Any configuration being placed "on (or below)" a component or "above (or under)" a component may mean not only that any configuration is placed in contact with the upper surface (or lower surface) of the component, but also that other configurations may be interposed between the component and any configuration placed on (or below) the component.

In addition, when a component is referred to as being "connected," or "coupled" to another component, it should be understood not only that the components may be directly connected or coupled to one another, but also that an intervening element may also be "interposed" between the components, or each component may be "connected," or "coupled" through other components. Also, when a part is referred to as being electrically coupled to another part, this means not only the case in which the parts are directly connected, but also the case in which the parts are connected with another element sandwiched therebetween.

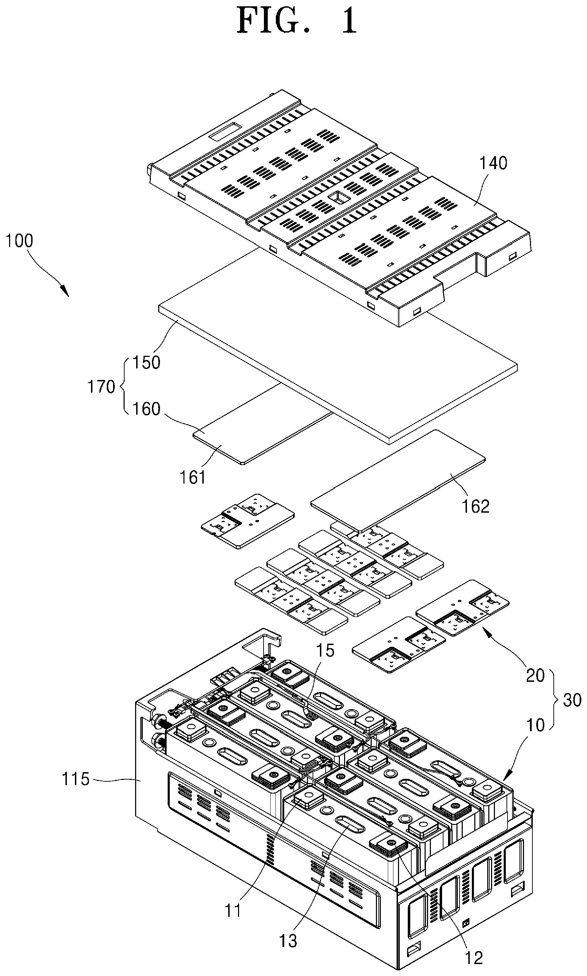

FIG. 1 is an exploded perspective view schematically illustrating an example of a battery module according to an embodiment of the present disclosure.

Referring to FIG. 1, the battery module 100 according to the embodiment of the present disclosure may include a cell array 30 including a plurality of battery cells 10 arranged in a plurality of rows that are parallel to each other. A plurality of busbars 20 electrically connect adjoining battery cells 10.

The battery cell 10 may include a first terminal 11, a second terminal 12, and a vent hole 13 through which internally generated gases are discharged. The first terminal of one battery cell and the second terminal of another battery cell adjacent thereto are electrically connected to each other by the busbar 20.

The first terminal 11 may be either a positive terminal or a negative terminal. When the first terminal 11 is a positive terminal, the second terminal 12 may be a negative terminal, and conversely, when the first terminal 11 is a negative terminal, the second terminal 12 may be a positive terminal. That is, the first terminal 11 and the second terminal 12 are formed with different electrical polarities and are not limited to a specific polarity.

A first terminal 11 of one battery cell 10 may be electrically connected to a second terminal 12 of another adjacent battery cell 10 through a busbar 20, and the second terminal 12 of the battery cell 10 may be electrically connected to a first terminal 11 of another adjacent battery cell 10 through another busbar 20. Although FIG. 1 illustrates a serial connection, the present disclosure is not limited to this structure, and battery modules 100 according to the present disclosure may adopt various connection structures as needed. In addition, the number and arrangement of battery cells 10 are not limited to the structure and configuration illustrated in FIG. 1, and the battery cells 10 may be changed as needed.

The battery module 100 may include a casing 115 accommodating the cell array 30 and a fire extinguishing section 170 disposed on the cell array 30. In addition, the battery module 100 may further include a cover section 140 coupled to the casing 115 to cover the cell array 30 and the fire extinguishing section 170. The casing 115 and the cover section 140 may be connected together by a fastening member such as a bolt. But the present disclosure is not limited thereto, and any method may be adopted so long as the method provides a connection between the casing 115 and the cover section 140. That is, the casing 115 and the cover section 140 may be connected to define an internal space therein, and the cell array 30 and the fire extinguishing section 170 may be accommodated in the internal space. Therefore, the material of the casing 115 and the cover section 140 may have properties to protect the cell array 30 and the fire extinguishing section 170 from mechanical shock or thermal shock.

The material of the casing 115 and the cover section 140 may include, but is not limited to, any one of durable and heat-resistant materials, such as acrylonitrile butadiene styrene (ABS), polycarbonate (PC), polypropylene (PP), aluminum, or stainless steel.

The fire extinguishing section 170 disposed between the cell array 30 and the cover section 140 may include a fire extinguishing sheet 160 configured to release an extinguishing agent at a certain temperature or higher. The fire extinguishing section 170 may also include a thermal conductive layer 150 configured to conduct heat throughout the fire extinguishing sheet 160. The fire extinguishing sheet 160 may be disposed on the cell array 30. In addition, the fire extinguishing sheet 160 may be activated by high-temperature gases or flames emitted through the vent hole 13 when the temperature of the battery module 100 increases. Specifically, the fire extinguishing sheet 160 disposed above the vent hole 13 may be melted by high-temperature gases or flames emitted through the vent hole 13. Accordingly, the extinguishing agent included inside the fire extinguishing sheet 160 may be released toward the battery module 100 to extinguish the fire in the battery module 100.

In some embodiments, the fire extinguishing sheet 160 may include a vulnerable portion having a lower melting point than the surrounding area that overlaps the vent hole 13. As the temperature of one battery cell 10 increases and high-temperature gases or flames are emitted through the vent hole 13 such that the fire extinguishing sheet 160 adjacent to the vent hole 13 melts, the vulnerable portion may more easily melt. Accordingly, the fire extinguishing sheet 160 may release the fire extinguishing agent around the vulnerable portion, thereby efficiently suppressing thermal runaway of the battery module 100.

In another example embodiment, the fire extinguishing sheet 160 may include an opening through which the vent hole 13 is exposed. When the fire extinguishing sheet 160 includes such an opening, the opening may act as a passage for discharging high-temperature gases or flames emitted through the vent hole 13 so that the high-temperature gases or flames emitted through the vent hole 13 may directly contact the thermal conductive layer 150 (described below) to thereby allow for diffusion of heat energy generated in the battery module 100 throughout the fire extinguishing sheet 160. Accordingly, even if a local thermal runaway occurs in the battery module, the heat may diffuse throughout the fire extinguishing sheet 160 through the thermal conductive layer 150. When heat diffuses throughout the fire extinguishing sheet 160, the extinguishing agent may be released from the entirety of the fire extinguishing sheet 160 to extinguish the fire in the battery module 100 in the early stage of thermal runaway, thereby improving the stability of the battery module 100.

The extinguishing agent and extinguishing method of the fire extinguishing sheet 160 may vary. For example, the extinguishing agent included in the fire extinguishing sheet 160 may be a material that blocks oxygen in the battery module 100 and extinguishes the fire by asphyxiation. In example embodiments, the extinguishing agent may be a solid aerosol included in a capsule form. In other example embodiments, the extinguishing agent included in the fire extinguishing sheet 160 may include, but is not limited thereto, a material such as NOVEC^{™} (dodecafluoro-2-methylpentan-3-one) or a coolant that lowers its temperature to cool and extinguish the battery module 100.

The ratio of the total weight of the extinguishing agent to the total weight of the fire extinguishing sheet 160 may range from 40% to 60%. That is, the fire extinguishing sheet 160 may include 40 wt% to 60 wt% of extinguishing agent. When the weight ratio of the extinguishing agent is less than 40 wt%, the extinguishing effect on the battery module 100 may be insufficient, and when the weight ratio of the extinguishing agent exceeds 60 wt%, it may be difficult to manufacture a fire extinguishing sheet 160 including the extinguishing agent.

In some embodiments, the fire extinguishing sheet 160 may include two or more types of extinguishing agents or may be formed in a multilayer structure. For example, the fire extinguishing sheet 160 may include extinguishing agents that are activated at different temperatures, or the fire extinguishing sheet 160 may include a first layer adjacent to the cell array 30 and a second layer on the first layer. The first layer adjacent to the cell array 30 may include a fire extinguishing agent having a relatively low activation temperature, and the second layer on the first layer may include a second extinguishing agent having a higher activation temperature than the fire extinguishing agent.

When the fire extinguishing sheet 160 includes two or more types of extinguishing agents or is formed with a multilayer structure, different types of extinguishing agents may operate sequentially depending on the temperature and amount of gases discharged through the vent hole 13. In addition, according to the dual operation of this fire extinguishing sheet 160, the fire extinguishing sheet operates sequentially according to the temperature and generation time of the gases so that the extinguishing agent may be continuously discharged.

A thermal conductive layer 150 may be positioned between the fire extinguishing sheet 160 and the cover section 140. When the temperature of one battery cell 10 increases, the fire extinguishing sheet 160 disposed above that battery cell 10 may melt. And when the thermal conductive layer 150 is positioned above the fire extinguishing sheet 160, the thermal conductive layer 150 may diffuse heat energy generated in one of the battery cells 10 throughout the fire extinguishing sheet 160.

Two or more fire extinguishing sheets 160 may be provided and spaced apart from each other, with the thermal conductive layer 150 being positioned to overlap all of the fire extinguishing sheets 160. For example, as illustrated in FIG. 1, the fire extinguishing sheet 160 may include a first fire extinguishing sheet 161 and a second fire extinguishing sheet 162. The thermal conductive layer 150 may be positioned to overlap both the first fire extinguishing sheet 161 and the second fire extinguishing sheet 162.

Accordingly, when thermal runaway occurs in one battery cell 10, the thermal conductive layer 150 may diffuse the thermal energy throughout the fire extinguishing sheet(s) 160. The extinguishing agent is thereby released from the entire fire extinguishing sheet 160 to extinguish the fire in the battery module 100 in the early stage to prevent a thermal runaway from diffusing throughout the entire battery module 100. Thus, the stability of the battery module 100 may be improved. If the thermal conductive layer 150 was omitted and the extinguishing agent is released only from an area of the fire extinguishing sheet 160 disposed above one of the battery cells 10, the extinguishing efficiency for the battery module 100 may decrease. And even if the extinguishing agent is released only from a part of the fire extinguishing sheet 160, the entire fire extinguishing sheet 160 would need to be discarded, which may result in waste of materials.

The thermal conductive layer 150 may include a material with excellent thermal conductivity. For example, the thermal conductive layer 150 may include, but is not limited to, at least one of copper, silver, gold, aluminum, and graphite.

The shape of the thermal conductive layer 150 may vary. In some embodiments, the thermal conductive layer 150 may include a portion that is breakable by thermal or mechanical shock in an area overlapping the vent hole 13. When the thermal conductive layer 150 includes such a breakable portion, as the temperature of one battery cell 10 increases and high-temperature gases are released through the vent hole 13, the breakable portion of the thermal conductive layer 150 may be broken to form a passage for discharging the high-temperature gases.

In another example embodiment, the thermal conductive layer 150 may include an opening corresponding to the vent hole 13 in an area overlapping the vent hole 13. When the thermal conductive layer 150 includes such an opening, an exhaust passage for high-temperature gases emitted through the vent hole 13 may be formed. Also, the cover section 140 disposed above the thermal conductive layer 150 may also include a gas discharge passage corresponding to the gas discharge passage that may be formed in the thermal conductive layer 150.

When the thermal conductive layer 150 includes a breakable portion or an opening and the cover section 140 also includes the gas discharge passage, high-temperature gases are discharged through the vent hole 13 and the thermal energy of the high-temperature gases may be discharged to outside of the battery module 100 through the high-temperature gas discharge passage.

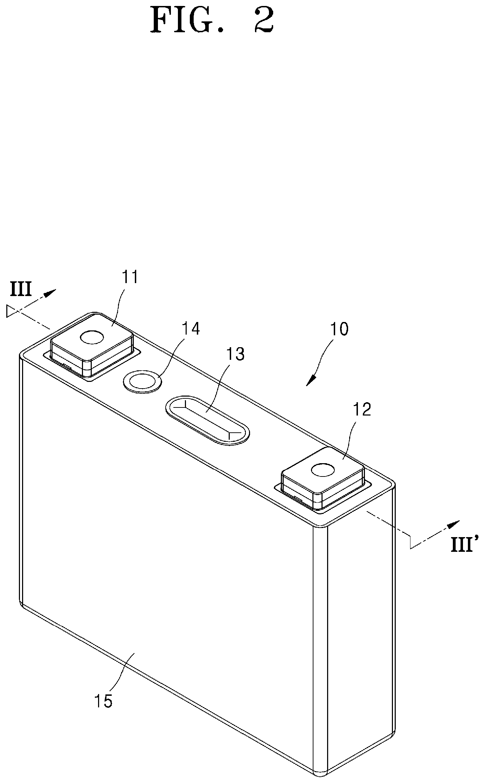

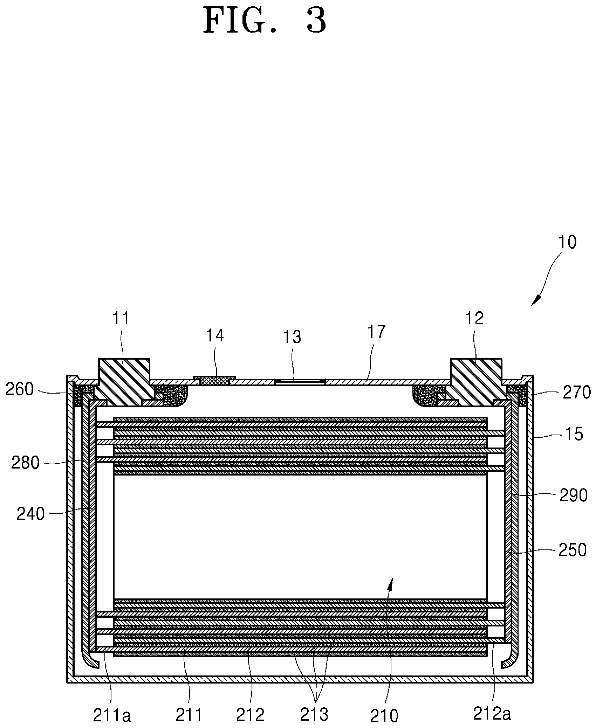

FIG. 2 is a perspective view schematically illustrating an example of a battery cell of the battery module of FIG. 1, and FIG. 3 is a schematic cross-sectional view taken along section III-III of FIG. 2.

Referring to FIGS. 2 and 3 together, a battery cell 10 according to an embodiment may include at least one electrode assembly 210 in which a positive electrode 211 and a negative electrode 212 are wound with a separator 213 interposed therebetween as an insulator. The electrode assembly 210 is accommodated in a casing 15.

The battery cell 10 according to this embodiment is illustrated as a prismatic lithium ion battery cell. However, the present disclosure is not limited to such an example, and the present disclosure may be applied to various types of battery cells such as lithium polymer battery cells or cylindrical battery cells.

The positive electrode 211 and the negative electrode 212 may each include a coated portion, which is a region where an active material is applied onto a current collector formed of a thin metal foil. The positive electrode 211 and the negative electrode 212 may also include non-coated portions 211a and 212a, which are regions where the active material is not coated.

The positive electrode 211 and the negative electrode 212 are wound with a separator 213 interposed therebetween as an insulator. However, the present disclosure is not limited to such a configuration. For example, the electrode assembly 210 may be formed in a structure in which a positive electrode and a negative electrode each made of a stack of sheets are alternately laminated with a separator interposed therebetween.

The casing 15 forms the overall outer appearance of the battery cell 10 and may be formed of conductive metal such as aluminum, aluminum alloy, or nickel-plated steel. In addition, the casing 15 may provide a space in which the electrode assembly 210 is accommodated.

The battery cell 10 may include a cap plate 17 covering an opening of the casing 15, with the casing 15 and the cap plate 17 being formed of a conductive material. The first terminal 11 and the second terminal 12 each electrically connected to the positive electrode 211 or the negative electrode 212 may be installed to protrude outward through the cap plate 17. Circumferential surfaces of the first terminal 11 and the second terminal 12 protrude, as upper posts, outward through the cap plate 17 and may be threaded and screw-fastened to the cap plate 17 with a nut. However, the present disclosure is not limited to such a configuration. In other embodiments, the first terminal 11 and the second terminal 12 may be formed of a rivet structure and may be riveted or may be welded to the cap plate 17.

The cap plate 17 may be formed from a thin plate and may be joined to the opening of the casing 15. The cap plate 17 may be provided with an electrolyte injection port 14 in which a sealing plug may be installed, and the cap plate 17 may include a notched vent hole 13.

The first terminal 11 and the second terminal 12 may be electrically connected to the current collector including the first and second current collectors 240 and 250 (hereinafter referred to as positive and negative current collectors) welded to a positive non-coated portion 211a or a negative non-coated portion 212a. For example, the first terminal 11 and the second terminal 12 may be welded to the positive and negative current collectors 240 and 250. However, the present disclosure is not limited to such a configuration, and the first terminal 11 and the second terminal 12 may be integrally formed with the positive and negative current collectors 240 and 250.

An insulating member may be positioned between the electrode assembly 210 and the cap plate 17. The insulating member may include first and second lower insulating members 260 and 270, each of which may be installed between the electrode assembly 210 and the cap plate 17.

In addition, according to embodiments of the present embodiment, one end of a separating member that may be installed to face one side of the electrode assembly 210 and may be positioned between the insulating member and the first and second terminals 11 and 12. The separating member may include first and second separating members 280 and 290.

Accordingly, ends of the first and second separating members 280 and 290 may be positioned to face one side of the electrode assembly 210 may be positioned between the first and second lower insulating members 260 and 270 and the first and second terminals 11 and 12.

The first terminal 11 and the second terminal 12 may be welded to the positive and negative current collectors 240 and 250 and may be connected to ends of the first and second separating members 280 and 290 and the first and second lower insulating members 260 and 270.

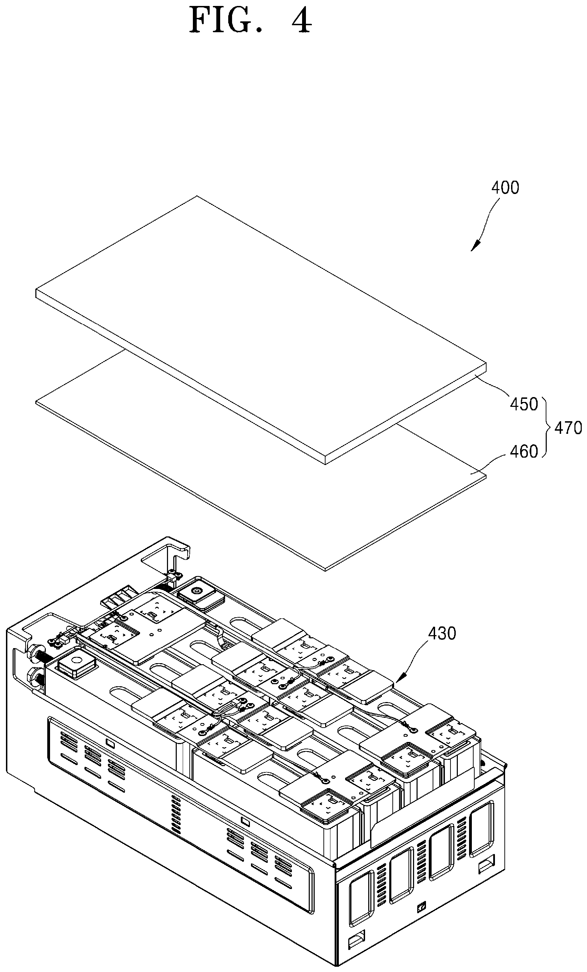

FIG. 4 is an exploded perspective view schematically illustrating another example of a battery module according to an embodiment of the present disclosure.

Referring to FIG. 4, the battery module 400 may include a cell array 430 and a fire extinguishing section 470 positioned above the cell array 430. The fire extinguishing section 470 may include a fire extinguishing sheet 460 and a thermal conductive layer 450. The fire extinguishing sheet 460 may be provided between the cell array 430 and a cover section (not illustrated).

The fire extinguishing sheet 460 may, for example, be positioned to overlap the entire area of the cell array 430. That is, the fire extinguishing sheet 460 may be of a form that covers the entire upper portion of the cell array 430. For example, the fire extinguishing sheet 460 may be in a rectangular shape with an area corresponding to the entire area of the cell array 430, but the present disclosure is not limited to such a configuration. In addition, the fire extinguishing sheet 460 may be manufactured separately from the battery module 400 and then placed on the cell array 430.

When the fire extinguishing sheet 460 covers the entire upper portion of the cell array 430, as the temperature of the battery module 400 increases, the fire extinguishing sheet may release a large amount of extinguishing agent toward the battery module 400 to effectively control or prevent thermal runaway. In addition, since the fire extinguishing sheet 460 covers the entire upper portion of the cell array 430, even if the temperature of any one battery cell increases so that high-temperature gases or flames are emitted, the extinguishing agent may be released from the entirety of the fire extinguishing sheet 460 to extinguish the fire in the battery module 400. Thus, when the fire extinguishing sheet 460 covers the entire upper portion of the cell array 430, it is possible to efficiently cope with fire in any one or all of the battery cells 10.

The thermal conductive layer 450 may be positioned on the fire extinguishing sheet 460. When the temperature of one battery cell 10 increases, the thermal conductive layer 450 may diffuse heat throughout the entire fire extinguishing sheet 460. Accordingly, the fire extinguishing sheet 460 may release the extinguishing agent not only in the local area where heat is generated, but also in the entire fire extinguishing sheet 460, thereby effectively extinguishing the fire in the battery module 400.

As the thermal conductive layer 450 is configured to diffuse heat throughout the entire fire extinguishing sheet 460, the shape of the thermal conductive layer 450 may correspond to the shape of the fire extinguishing sheet 460. In addition, the thermal conductive layer 450 may be manufactured separately from the battery module 400 and then placed on the fire extinguishing sheet 460.

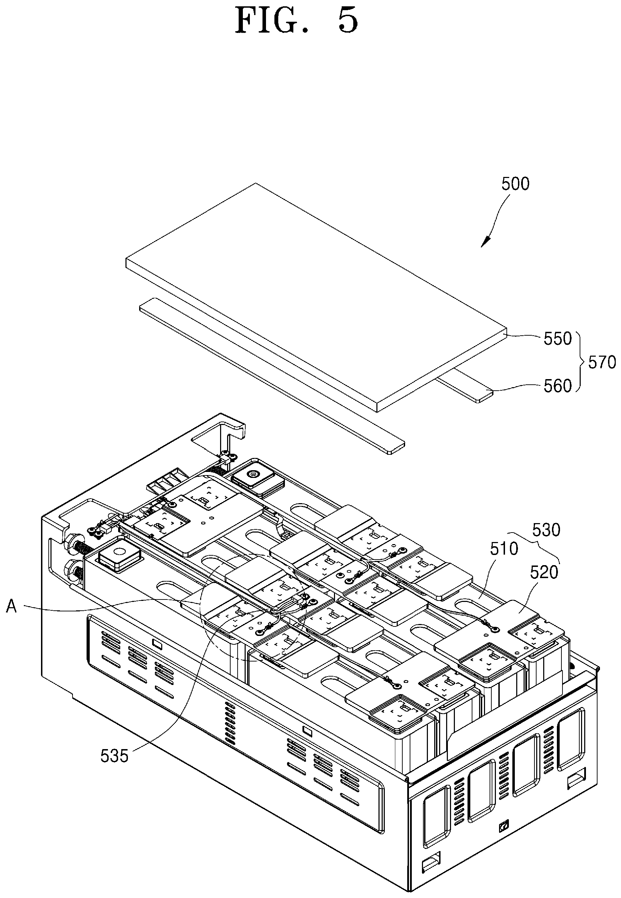

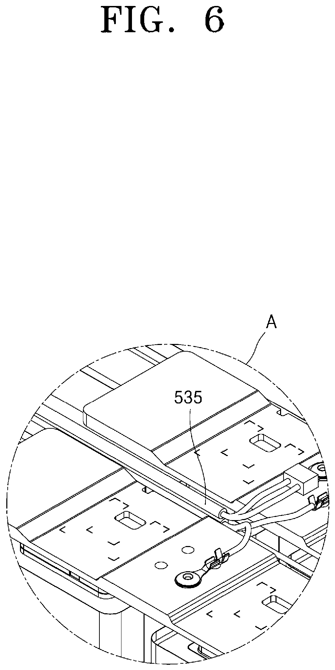

FIG. 5 is an exploded perspective view schematically illustrating another example of a battery module according to an embodiment of the present disclosure, and FIG. 6 is a perspective view schematically illustrating part A of FIG. 5.

Referring to FIGS. 5 and 6, the battery module 500 may include a cell array 530 and a fire extinguishing section 570. In addition, the cell array 530 may further include wiring 535 electrically connected to busbars 520. The fire extinguishing section 570 may include a fire extinguishing sheet 560 and a thermal conductive layer 550.

A plurality of battery cells 510 may be arranged in a plurality of rows that are parallel to each other, and wiring 535 is positioned between the rows. The wiring 535 may be electrically connected to the busbars 520 that electrically connect the battery cells 510.

A terminal for temperature measurement and/or a terminal for voltage measurement may be connected to the busbars 520, and the wiring 535 may be connected to the terminal for temperature measurement and/or the terminal for voltage measurement.

Heat generation in the battery module 500 may occur not only in the battery cells 510, but also as a result of a short circuit in the wiring 535. And heat generated in the wiring 535 may cause thermal runaway in the adjacent battery cells 510. Accordingly, the fire extinguishing sheet 560 is positioned in an area overlapping the wiring 535, and when the temperature of the wiring 535 increases, the fire extinguishing sheet 560 may release an extinguishing agent toward the wiring 535 to lower the temperature of the wiring 535 or extinguish the wiring. Thus, heat is prevented from being transferred to the entire battery module 500.

The wiring 535 may include a material having excellent thermal conductivity. Therefore, when the fire extinguishing sheet 560 is formed to extend in the same direction as the longitudinal direction of the wiring 535, heat conduction also occurs through the wiring 535, so the fire extinguishing sheet 560 may operate as a whole.

When the fire extinguishing sheet 560 is positioned on the cell array 530, there is an advantage in that it is easy to extinguish a fire occurring in the cell array 530. However, defects such as a pinching in the protruding wiring 535 may occur. In addition, when the fire extinguishing sheet 560 is positioned on the cell array 530, foreign substances inside the battery cell 510 may damage the wiring 535 during an occurrence of thermal runaway, causing a secondary thermal runaway. However, when the fire extinguishing sheet 560 is positioned in an area covering the wiring 535, a secondary thermal runaway caused by the wiring 535 being pinched or foreign substances inside the battery cell 510 damaging the wiring 535 may be prevented. Thus, in some embodiments, the battery module 500 may be equipped with both a fire extinguishing sheet (not illustrated) positioned on the cell array 530 and a fire extinguishing sheet 560 positioned to overlap the wiring 535.

A thermal conductive layer 550 may be positioned on the fire extinguishing sheet 560. The thermal conductive layer 550 may diffuse heat throughout the entire fire extinguishing sheet 560. Accordingly, the fire extinguishing sheet 560 may operate not only in a local area where heat is generated, but also in the entire area of the fire extinguishing sheet 560. Thus, a fire may be effectively extinguished in the battery module 500. In embodiments of the present disclosure, the thermal conductive layer 550 is formed so as to cover the entire fire extinguishing sheet 560. For example, the thermal conductive layer 550 may be formed to have an area that is larger than the area of the fire extinguishing sheet 560. When the wiring 535 is arranged in multiple rows, fire extinguishing sheets 560 may be positioned on each wiring 535, and the thermal conductive layer 550 may be formed so as to cover all of the multiple fire extinguishing sheets 560 that are spaced apart from each other. The thermal conductive layer 550 may be manufactured separately from the battery module 500 and then placed on the fire extinguishing sheet 560.

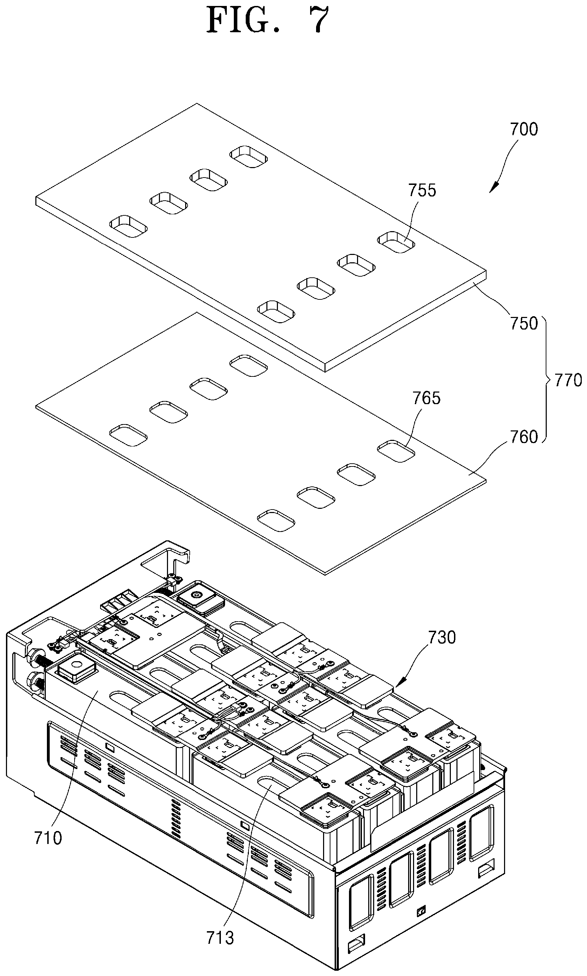

FIG. 7 is an exploded perspective view schematically illustrating another example of a battery module according to an embodiment of the present disclosure.

Referring to FIG. 7, the battery module 700 may include a cell array 730 and a fire extinguishing section 770 on the cell array 730. The fire extinguishing section 770 may include a fire extinguishing sheet 760 and a thermal conductive layer 750. The fire extinguishing sheet 760 may be positioned on the cell array 730. And the fire extinguishing sheet 760 may include an opening 765 that exposes a vent hole 713 on top of the battery cell 710. The opening acts as a passage for discharging high-temperature gases emitted through the vent hole 713 so that the high-temperature gases or flames emitted through the vent hole 713 may directly contact the thermal conductive layer 750. Thus, heat energy generated in the battery module 700 may diffuse throughout the fire extinguishing sheet 760.

The thermal conductive layer 750 may be positioned on the fire extinguishing sheet 760. As the temperature of the battery module 700 increases, the thermal conductive layer 750 may diffuse the heat throughout the entire fire extinguishing sheet 760. Accordingly, the fire extinguishing sheet 760 may release an extinguishing agent not only from the local area where heat is generated, but also from the entire fire extinguishing sheet 760, thereby effectively extinguishing the battery module 700.

So that the thermal conductive layer 750 may diffuse heat throughout the entire fire extinguishing sheet 760, the shape of the thermal conductive layer 750 may correspond to the shape of the fire extinguishing sheet 760. An opening 755 corresponding to the opening 765 may be formed in the fire extinguishing sheet 760. When the fire extinguishing sheet 760 and the thermal conductive layer 750 include the opening 765 and the opening 755, respectively, the openings may form an exhaust passage for high-temperature gases emitted through the vent hole.

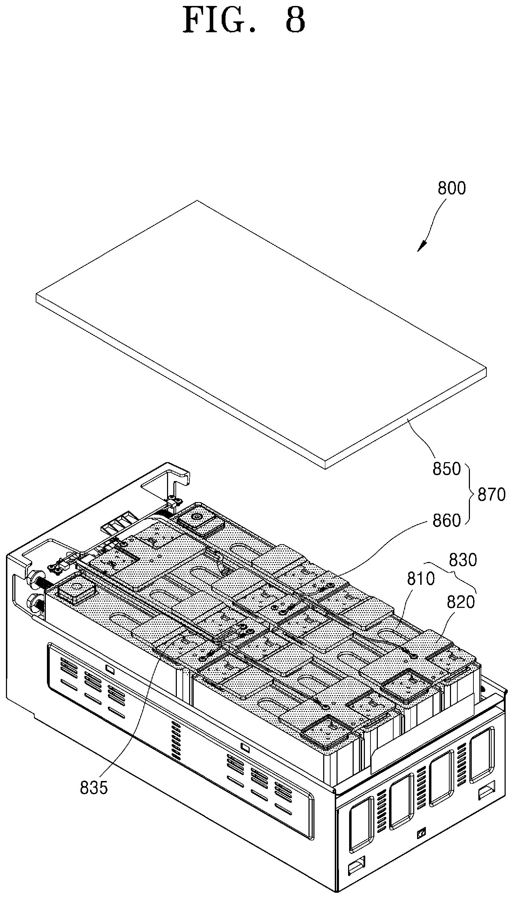

FIG. 8 is an exploded perspective view schematically illustrating another example of a battery module according to an embodiment of the present disclosure.

Referring to FIG. 8, the battery module 800 may include a cell array 830 and a fire extinguishing section 870 positioned on the cell array 830. In addition, the fire extinguishing section 870 may include a fire extinguishing sheet 860 and a thermal conductive layer 850.

In an embodiment of the present disclosure, the extinguishing sheet 860 may be a layer formed by applying a liquid extinguishing agent onto the cell array 830 (e.g., the battery cells 810 and the busbars 820) and then drying the extinguishing agent. In this way, the fire extinguishing sheet 860 may be formed in close contact with the upper surface of the cell array 830. Accordingly, the lower surface of the fire extinguishing sheet 860 may have the same shape as the upper surface of the cell array 830. That is, the fire extinguishing sheet 860 may include an irregular portion corresponding to that of the cell array 830. In addition, since the fire extinguishing sheet 860 is in close contact with the upper surface of the cell array 830, when thermal runaway of the battery module 800 occurs, it is possible to prevent fragments of the battery cell 810 or a cover section (not illustrated) from entering the gap between the fire extinguishing sheet 860 and the cell array 830 and thereby causing a short circuit.

The thermal conductive layer 850 may be positioned on the fire extinguishing sheet 860. As the temperature of the battery module 800 increases, the thermal conductive layer 850 may diffuse the heat throughout the entire fire extinguishing sheet 860. Accordingly, the fire extinguishing sheet 860 may release an extinguishing agent not only from the local area where heat is generated, but also from the entire fire extinguishing sheet 860. Thus, a fire in the battery module 800 may be effectively extinguished.

FIG. 8 illustrates an example in which an area of the fire extinguishing sheet 860 corresponds to the entire area of the cell array 830. But the present disclosure is not limited to such a configuration. For example, the fire extinguishing sheet 860 of FIG. 8 may have a shape extending in one direction along the wiring 835 so as to overlap the wiring 835, as in the example illustrated and described with respect to FIG. 5. In such a case, by the fire extinguishing sheet 860 being in close contact with the wiring 835, pinching of the wiring 835 located between the battery cells 810 may be effectively prevented, and damage to the wiring 835 by foreign substances may also be prevented.

In another example, the fire extinguishing sheet 860 of FIG. 8 may be formed by applying a liquid extinguishing agent along the wiring 835 so as to overlap the wiring 835, and a fire extinguishing sheet (such as 160 of FIG. 1) having a sheet shape as illustrated and described with respect to FIG. 1, etc., may be additionally provided in other areas of the cell array 830.

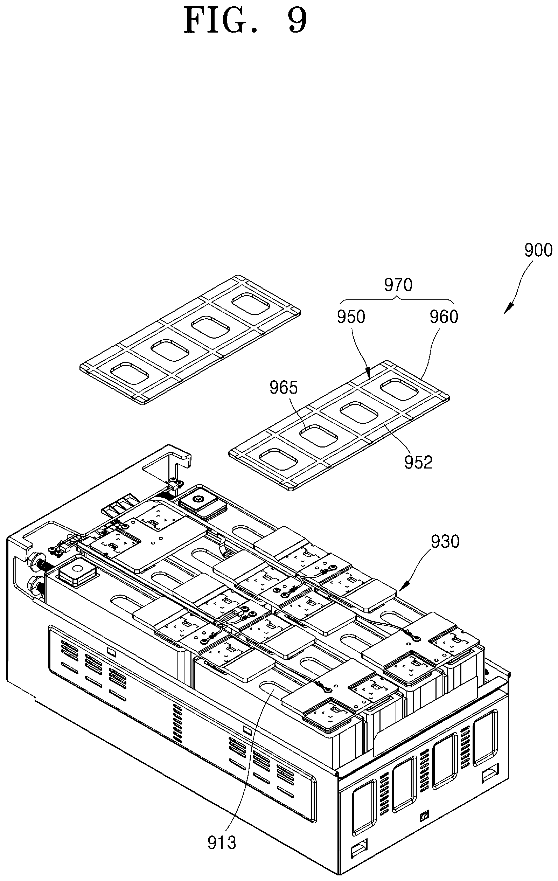

FIG. 9 is an exploded perspective view schematically illustrating another example of a battery module according to an embodiment of the present disclosure.

Referring to FIG. 9, the battery module 900 may include a cell array 930 and a fire extinguishing section 970 on the cell array 930. In addition, the fire extinguishing section 970 may include a fire extinguishing sheet 960 and a thermal conductive layer 950. The thermal conductive layer 950 may be located inside the fire extinguishing sheet 960. With the thermal conductive layer 950 inserted into the fire extinguishing sheet 960, the integration of the battery module 900 may be facilitated.

The thermal conductive layer 950 may include at least one thermal conductive wiring 952 having a smaller area than the fire extinguishing sheet 960. The thermal conductive wiring 952 may form, for example, a grid pattern. However, the present disclosure is not limited to such a configuration. So long as the thermal conductive layer 950 is positioned inside the fire extinguishing sheet 960 and the thermal conductive wiring 952 diffuses heat throughout the entire fire extinguishing sheet 960, the thermal conductive wiring 952 may have various shapes and configurations.

The thermal conductive wiring 952 may include, but is not limited to, materials with excellent thermal conductivity, such as copper, silver, gold, aluminum, or graphite.

While FIG. 9 illustrates the fire extinguishing sheet 960 as having an area corresponding to vent holes 913 and surroundings thereof so that openings 965 expose the vent holes 913, it is of course possible for the thermal conductive layer 950 to be positioned inside the fire extinguishing sheet (such as 160 in FIG. 1, as described above).

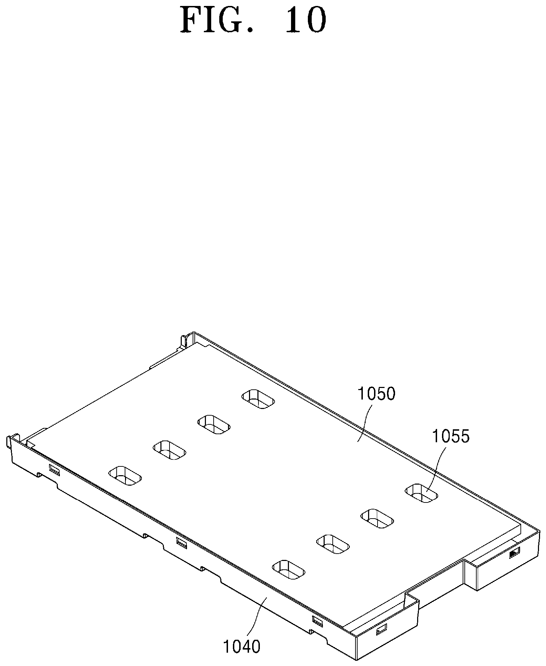

FIG. 10 is a perspective view schematically illustrating an example of a cover section including a thermal conductive layer of a battery module according to an embodiment of the present disclosure.

Referring to FIG. 10, the cover section 1040 covering the battery module may include a thermal conductive layer 1050 including an opening 1055 corresponding to the vent hole. The thermal conductive layer 1050 may be attached to the cover section 1040 so that manufacturing of the battery module may be simplified.

When thermal runaway occurs in a battery module, strong vibration may be generated in the battery module, which may cause the positions of the fire extinguishing sheet (not illustrated) and the thermal conductive layer 1050 to be misaligned. In such a case, the area of the fire extinguishing sheet where the thermal conductive layer 1050 does not overlap the thermal conductive layer 1050 may not experience heat diffusion, and, thus, the fire extinguishing sheet may not be able to completely release the extinguishing agent. However, when the cover section 1040 includes the thermal conductive layer 1050 and the thermal conductive layer 1050 is fixed to the cover section 1040, even if thermal runaway occurs in the battery module, the thermal conductive layer 1050 may be fixed in position without relative to the fire extinguishing sheet. Accordingly, even if a thermal runaway occurs in the battery module and a strong vibration is generated in the battery module, the positions of the thermal conductive layer 1050 and the fire extinguishing sheet stay aligned such that the entire area of the fire extinguishing sheet operates to effectively extinguish the battery module.

According to embodiments of the present disclosure, a battery module includes the fire extinguishing sheet and the thermal conductive layer that diffuses heat throughout the fire extinguishing sheet. Thus, if the battery module experiences a local thermal runaway, an extinguishing agent is released from an entirety of the fire extinguishing sheet to extinguish the battery module at the initial stage of thermal runaway and prevent the thermal runaway from diffusing throughout the entire battery module. Thus, stability of the battery module is improved.

However, the effects obtainable through the present disclosure are not limited to the effects described above, and other technical effects not mentioned will be clearly understood by those skilled in the art from the descriptions provided herein.

Although the present disclosure has been described above by means of embodiments and drawings, the present disclosure is not limited to the embodiments.

**It** should be understood that embodiments described herein are descriptive and not for purposes of limitation. Descriptions of features or aspects within each embodiment should typically be considered as available for other similar features or aspects in other embodiments.

## Claims

1. A battery module (100, 400, 500, 700, 800, 900) comprising:
a cell array (30, 430, 530, 730, 830, 930) comprising a plurality of battery cells (10, 510, 810) and a plurality of busbars (20, 520, 820) electrically connecting the plurality of battery cells;
a casing (115) accommodating the cell array;
a cover section (140, 1040) coupled to the casing to cover the cell array; and
a fire extinguishing section (170, 470, 570, 770, 870) disposed between the cell array and the cover section,
wherein the fire extinguishing section comprises a fire extinguishing sheet (160, 460, 560, 760, 860, 960) including a fire extinguishing agent and a thermal conductive layer (150, 450, 550, 750, 850, 950, 1050) configured to conduct heat throughout the fire extinguishing sheet.

2. The battery module of claim 1, wherein the fire extinguishing sheet (460, 860) is positioned to overlap an entire area of the cell array.

3. The battery module of claim 1 or claim 2, wherein each of the battery cells comprises a vent hole (13, 713, 913) on a surface thereof, and
wherein the fire extinguishing sheet (160, 760, 960) comprises an opening (765, 965) through which the vent hole is exposed.

4. The battery module of any one of claims 1 to 3, wherein the cell array (530) further comprises wiring (535, 835) electrically connected to the busbars (520, 820), and the fire extinguishing sheet (660, 860) is positioned to overlap the wiring.

5. The battery module of claim 4, wherein the battery cells (510, 810) are arranged in a plurality of rows that are parallel to each other, and the wiring (535, 835) is positioned between the rows.

6. The battery module of any one of claims 1 to 5, wherein a lower surface of the fire extinguishing sheet (460, 760, 860) has the same shape as an upper surface of the cell array (430, 730, 830).

7. The battery module of any one of claims 1 to 6, wherein the fire extinguishing sheet (160, 460, 560, 760, 860, 960) is positioned between the cell array (30, 430, 530, 730, 830, 930) and the thermal conductive layer (150, 450, 550, 750, 850, 950).

8. The battery module of any one of claims 1 to 7, wherein the thermal conductive layer (1050) is bonded to the cover section (1040).

9. The battery module of any one of claims 1 to 6, wherein the thermal conductive layer (950) is positioned inside the fire extinguishing sheet (960), and the thermal conductive layer comprises at least one thermal conductive wiring (952).

10. The battery module of claim 1, wherein the fire extinguishing sheet (160, 460, 560, 760, 860, 960) includes 40 wt% to 60 wt% of the extinguishing agent.
